Europäisches Patentamt

European Patent Office

Office européen des brevets

(11) Veröffentlichungsnummer: **0 130 267**
**B1**

## (12) EUROPÄISCHE PATENTSCHRIFT

(45) Veröffentlichungstag der Patentschrift:
25.06.86

(51) Int. Cl.⁴: **B 23 C 5/22**, B 23 C 5/08

(21) Anmeldenummer: 83890109.8

(22) Anmeldetag: 05.07.83

(54) Messerkopf.

(43) Veröffentlichungstag der Anmeldung:
09.01.85 Patentblatt 85/2

(45) Bekanntmachung des Hinweises auf die Patenterteilung:
25.06.86 Patentblatt 86/26

(84) Benannte Vertragsstaaten:
AT DE FR GB IT

(56) Entgegenhaltungen:
AT - B - 194 219
DE - B - 2 515 937
US - A - 2 835 024
US - A - 3 242 553

(73) Patentinhaber: **GFM Gesellschaft für Fertigungstechnik und Maschinenbau Gesellschaft m.b.H., Ennserstrasse 14, A-4403 Steyr (AT)**

(72) Erfinder: **Kirchberger, Peter, Dipl.-Ing., Schulgasse 3, Haag (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

## Beschreibung

Die Erfindung betrifft einen Messerkopf, bestehend aus einem scheibenförmigen Grundkörper mit dem Umfang entlang aneinandergereihten, einzeln festspannbaren Messerhaltern zur Aufnahme einer Vielzahl von Messerplättchen.

Zur Bestückung des Messerkopfes mit seinen Messerplättchen eigene Messerhalter zu verwenden, bietet gegenüber dem unmittelbaren Einsatz der Messerplättchen in Aussparungen des Grundkörpers den Vorteil, die Messerplättchen durch die entsprechende Stützflächen bildenden Messerhalter kassettenartig aufnehmen zu können und auf platzsparendere Weise günstige Abstützverhältnisse für die Messerplättchen zu erhalten. Ausserdem kann für die Messerhalter ein zur Aufnahme der Abstützkräfte speziell geeigneter Werkstoff gewählt werden, wobei die Messerhalter selbst auch für den Grundkörper Schutz bieten. Darüber hinaus erlauben die Messerhalter nicht nur eine starke Messerplättchenbestückung des Messerkopfes und dadurch eine erhöhte Standzeit, sondern ermöglichen durch Messerhalteraustausch eine Änderung der Messerplättchenzahl und -anordnung und damit den Einsatz des Messerkopfes zur Bearbeitung verschiedener Profile.

Um eine gute Bearbeitungsqualität zu erreichen muss allerdings für eine exakte und stabile Lagerung der Messerhalter im Grundkörper gesorgt sein, so dass bisher die Messerhalter in radialnutenförmigen Aussparungen des Grundkörpers verkeilt sind, was aber einen erhöhten Herstellungsaufwand bedeutet und vor allem die Platz- und Bestückungsverhältnisse insbesondere bei innenschneidenden Messerköpfen beeinträchtigt.

Es wurde auch schon vorgeschlagen, segmentförmige Messerhalter dem Umfang des Grundkörpers entlang unter Freilassung jeweils eines radialen Abstandspaltes aneinanderzureihen, wobei die einen zur Rotationsebene parallelen Flansch und eine quer dazu gerichtete zylindrische Stützschulter aufweisenden Messerhalter auf einer umlaufenden Ringschulter des Grundkörpers sitzen und mit axialen Spannschrauben über den Flansch am Grundkörper festgespannt sind. Es kommt zu einer recht ungenügenden Messerhalterabstützung, da die hauptsächlich in Umfangsrichtung wirkenden Schnittkräfte und das beim Schnitt auf die Messerhalter einwirkende Kippmoment allein durch den Reibungsschluss zwischen Flansch und Ringschulter aufgenommen werden müssen. Zudem sitzen die Messerhalter auf Grund der entsprechenden Bemessung ihres Flansches recht einseitig auf der Ringschulter, so dass zur Aufnahme der Radialbelastungen ebenfalls nur eine verhältnismässig kleine und auch aussermittige Auflagerfläche zur Verfügung steht.

Der Erfindung liegt daher die Aufgabe zugrunde, diese Mängel zu beseitigen und einen Messerkopf der eingangs geschilderten Art zu schaffen, der mit geringem Konstruktionsaufwand eine sichere, stabile Lagerung der Messerhalter gewährleistet und dabei eine Messerhalteranordnung unter optimaler Raumnutzung erlaubt.

Die Erfindung löst diese Aufgabe dadurch, dass sich die im wesentlichen radial verspannbaren Messerhalter jeweils einerends über einen vorkragenden Schulteransatz an einem Gegenansatz des benachbarten Messerhalters und andernends über eine Auflagerfläche an einer Gegenfläche des Grundkörpers abstützen. Durch die radiale Spannkraft werden die Messerhalter in beiden Endbereichen satt gegen ihre Abstützung gedrückt, so dass auch unter geringer Verspannung ein kippsicherer Sitz mit grosser Abstützbasis gegeben ist. Darüber hinaus trägt jeder Messerhalter zusätzlich zur Fixierung des benachbarten Messerhalters bei, was zu einer gegenseitigen Verspannung aller Messerhalter führt und die Aufnahme der umlaufenden Schnittkräfte erleichtert. Ausserdem ermöglicht das gegenseitige Übergreifen der Messerhalter entlang des Grundkörperumfanges ein dichtes Aneinanderreihen der Messerhalter und damit eine gewünschte kleine Messerteilung bzw. starke Messerplättchenbestückung.

Eine besonders stabile Messerhalterlagerung ergibt sich dabei, wenn erfindungsgemäss der Schulteransatz am in Messerkopfdrehrichtung hinteren Messerhalterende vorgesehen ist, da dann jeweils das vordere Messerhalterende, das beim Schnitt durch das auf den Messerhalter einwirkende Kippmoment sich abzuheben versucht, vom vorangehenden Messerhalter niedergedrückt wird. Für dieses Niederdrücken steht so zusätzlich zur Messerhalterverspannung das auf den vorangehenden Messerhalter einwirkende Kippmoment zur Verfügung, das ja ein Kippen des Messerhalters um sein hinteres Ende und in diesem Bereich daher eine Verstärkung der Auflagerkraft verursacht.

Gemäss einer Weiterbildung der Erfindung ist jeder Messerhalter über eine vom Grundkörper her im den Bereich zwischen Schulteransatz und Auflagerfläche einschraube Spannschraube verspannt. Durch die gute beidseitige Abstützung der Messerhalter und die gute Aufnahme des Kippmomentes genügt eine einzige Spannschraube, die im Bereich der grössten Materialstärke des Messerhalters, also im Mittenbereich zwischen den beiden Auflagerstellen, gesetzt werden kann. Durch das Einschrauben dieser Spannschraube vom Grundkörper her ist eine entsprechende Zugänglichkeit gegeben, wobei sich eine einfache Anordnung dieser Spannschrauben durch ihre Schrägstellung gegenüber einer Normalebene auf die Messerkopfachse erreichen lässt.

Um den Messerhaltern eine seitliche Abstützung zur Aufnahme axialer Kraftkomponenten zu bieten, genügt es bei leichteren Schnitten, beispielsweise beim Bearbeiten von Gussstücken, die Messerhalter über eine Randleiste an einem Stirnflächenansatz des Grundkörpers zu führen, wobei die schräggestellte Spannschraube für das satte Anliegen der Randleiste an diesem Ansatz sorgt. Eine sichere und auch für schwerste Schnitte geeignete Seitenführung für die Messerhalter ergibt sich allerdings, wenn erfindungsgemäss der Grundkörper eine Umfangsnut aufweist, in die die Messerhalter mit einer über die Auflagerfläche vorragenden Mittenführung eingreifen, wodurch

nach beiden Achsrichtungen wirksame Seitenstützflächen entstehen. Sowohl bei der Randleiste als auch bei der Mittenführung bleiben dennoch breite, die übrige Stärke des Grundkörpers einnehmende Auflagerflächen für die radiale Messerhalterabstützung erhalten.

Vorteilhaft ist es weiters, wenn der Grundkörper umfangsseitig in Art einer Sägezahnprofilierung aneinandergereihte Aussparungen für den Einsatz der Messerhalter aufweist. Diese Sägezahnprofilierung bildet Aussparungen mit einer Basisauflage- und einer Rückenstützfläche für die Messerhalter, wodurch ein Formschluss zur Schnittkraftaufnahme und eine exakte Positionierung gegeben sind. Die zur Tangentialrichtung geneigte Basisauflagerfläche bewirkt dabei zusammen mit der im wesentlichen radialen verspannung gewissermassen eine Selbstzentrierung, da eine die Messerhalter gegen die Rückenstützfläche drückende Spannkraftkomponente auftritt.

Die Erfindung ist in der Zeichnung an Hand eines Ausführungsbeispieles schematisch dargestellt, und zwar zeigen

Fig. 1 einen Teil eines erfindungsgemässen Messerkopfes in Stirnansicht und

Fig. 2 einen Axialschnitt nach der Linie II-II der Fig. 1.

Um den ringscheibenförmigen Grundkörper 1 des ausschnittsweise dargestellten Messerkopfes möglichst platzsparend mit einer Vielzahl von Messerplättchen 2 bestücken zu können, werden klotzartige Messerhalter 3 verwendet, die dem Umfang des Grundkörpers 1 entlang aneinandergereiht sind. Sie können, wie im dargestellten Ausführungsbeispiel, bei einem innenschneidenden Messerkopf am Innenumfang des scheibenförmigen Grundkörpers oder in ähnlicher Weise bei aussenschneidenden Messerköpfen am Aussenumfang des Grundkörpers sitzen. Die Messerhalter 3 nehmen die Messerplättchen 2 kassettenartig auf, wobei zur Messerplättchenfixierung beispielsweise Befestigungsschrauben 4 dienen. Die Messerhalter 3 ihrerseits sitzen in durch eine Art Sägezahnprofilierung 5 des Grundkörpers 1 gebildeten Aussparungen 6 und stützen sich einerseits an ihrem in Drehrichtung hinteren Ende über einen vorkragenden Schulteransatz 7 an einem Gegenansatz 8 des nachfolgenden Messerhalters und anderseits am vorderen Ende über eine Auflagerfläche 9 an einer Gegenfläche 10 des Grundkörpers 1, die sich durch die Sägezahnprofilierung 5 ergibt, ab. Zum Verspannen der Messerhalter 3 ist jeweils eine in einer Axialebene liegende, aber zur Normalebene auf die Messerkopfachse schräggestellte Spannschraube 11 vorgesehen, die von der Stirnseite 1a des Grundkörpers her in den Bereich zwischen Schulteransatz 7 und Auflagerfläche 9 der Messerhalter 3 eingeschraubt ist.

Auf Grund dieser beidseits zur im wesentlichen radialen Verspannung liegenden Abstützung der Messerhalter 3 ergibt sich auf einfache Weise eine stabile, kippsichere Lagerung der Messerhalter 3, wobei das Übereinandergreifen benachbarter Messerhalter zusätzlich für eine höchsten Anforderungen genügenden Kippsicherheit sorgt. Ausserdem gewährleistet die Aneinanderreihung der Aussparungen 6 zu einer Art Sägezahnprofilierung des Grundkörpers mit den Rückenstützflächen 12 eine direkt den Schnittkräften entgegenwirkende Messerhalterabstützung und bringt eine exakte Positionierung der Messerhalter 3 mit sich.

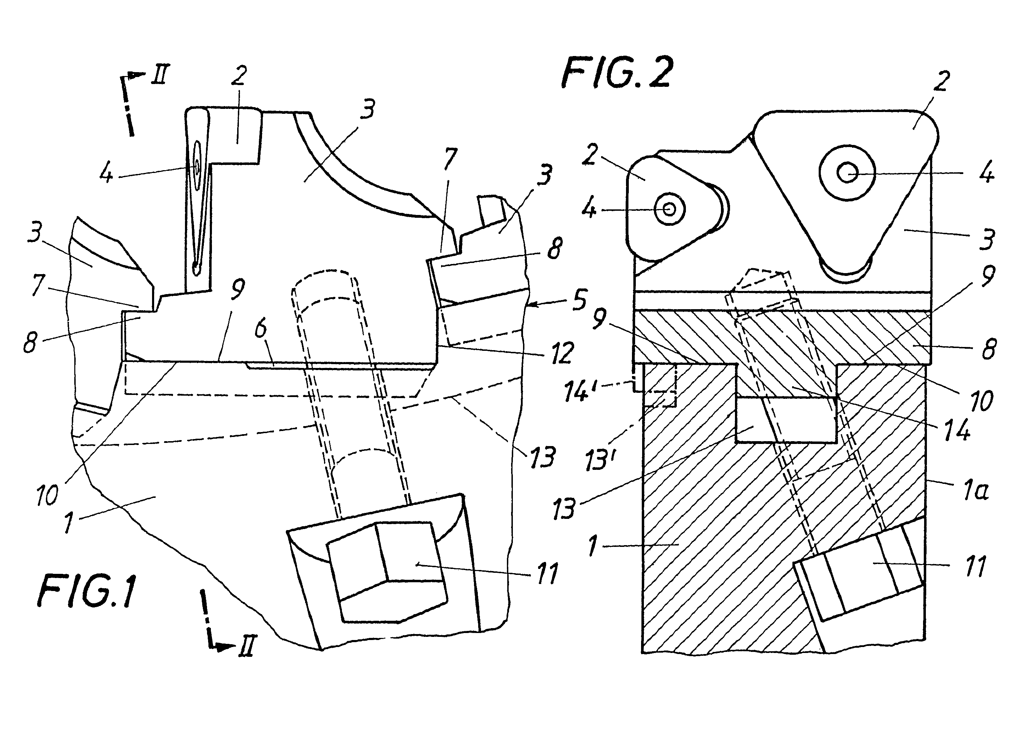

Zur Aufnahme axialer kraftkomponenten bei der Messerhalterlagerung ist der Grundkörper 1 mit einer Umfangsnut 13 versehen, in die die Messerhalter 3 mit einer vorragenden Mittenführung 14 eingreifen. Damit können Axialkräfte beider Richtungen sicher aufgefangen werden, und es bleibt ausserdem eine symmetrische Abstützung der Messerhalter 3 in radialer Richtung erhalten. Bei kleineren Schnittkräften lässt sich eine Seitenabstützung der Messerhalter 3, wie strichpunktiert in Fig. 2 angedeutet, auch durch eine Randleiste 14' erreichen, die sich an einem Stirnflächenansatz 13' des Grundkörpers 1 anlegt.

## Patentansprüche

1. Messerkopf, bestehend aus einem scheibenförmigen Grundkörper (1) mit dem Umfang entlang aneinandergereihten, einzeln festspannbaren Messerhaltern (3) zur Aufnahme einer Vielzahl von Messerplättchen (2), dadurch gekennzeichnet, dass sich die im wesentlichen radial verspannbaren Messerhalter (3) jeweils einerends über einen vorkragenden Schulteransatz (7) an einem Gegenansatz (8) des benachbarten Messerhalters (3) und andernends über eine Auflagerfläche (9) an einer Gegenfläche (10) des Grundkörpers (1) abstützen.

2. Messerkopf nach Anspruch 1, dadurch gekennzeichnet, dass der Schulteransatz (7) am in Messerkopfdrehrichtung hinteren Messerhalterende vorgesehen ist.

3. Messerkopf nach Anspruch 1 oder 2, dadurch gekennzeichnet, dass jeder Messerhalter (3) über eine vom Grundkörper (1) her in den Bereich zwischen Schulteransatz (7) und Auflagerfläche (9) einschraubbare Spannschraube (11) verspannt ist.

4. Messerkopf nach einem der Ansprüche 1 bis 3, dadurch gekennzeichnet, dass der Grundkörper (1) eine Umfangsnut (13) aufweist, in die die Messerhalter (3) mit einer über die Auflagerfläche (9) vorragenden Mittenführung (14) eingreifen.

5. Messerkopf nach einem der Ansprüche 1 bis 4, dadurch gekennzeichnet, dass der Grundkörper (1) umfangsseitig in Art einer Sägezahnprofilierung (15) aneinandergereihte Aussparungen (6) für den Einsatz der Messerhalter (3) aufweist.

## Claims

1. An inserted-tooth cutter consisting of a disc-shaped body (1) and tooth holders (3), which are adapted to be individually clamped in position and are spaced apart around the periphery of the body and are adapted to accommodate a multiplicity of tooth plates (2), characterized in that each of the tooth holders (3), which are adapted to be substantially radially clamped, bears at one end with a shoulder-forming protruding extension (7) on a cooperating extension (8) of the adjacent tooth holder (3) and bears at the other end with a bearing surface (9) on a mating surface (10) of the body (1).

2. An inserted-tooth cutter according to claim 1, characterized in that the shoulder-forming extension (7) is provided at that end of the tooth holder which is the trailing end in the direction of rotation of the inserted-tooth cutter.

3. An inserted-tooth cutter according to claim 1 or 2, characterized in that each tooth holder (3) is clamped by means of a clamp screw (11), which is adapted to be screwed to extend from the body (1) into the region between the shoulder-forming extension (7) and the bearing surface (9).

4. An inserted-tooth cutter according to any of claims 1 to 3, characterized in that the body (1) has a peripheral groove (13), which receives a centering guide (14), which is carried by and protrudes from the tooth holders beyond the bearing surface (9).

5. An inserted-tooth cutter according to any of claims 1 to 4, characterized in that the body (1) is provided at its periphery with recesses (6), which are arranged in succession like sawteeth (15) and serve to receive the tooth holders (3).

**Revendications**

1. Tête de couteaux formée d'un corps principal en forme de disque (1) muni de porte-couteaux (3) alignés le long de la circonférence, pouvant être bloqués individuellement, pour le logement de multiples plaquettes de couteau (2), caractérisée par le fait que les porte-couteaux (3) pouvant être bloqués pratiquement radialement s'appuient chacun à une extrémité, par l'intermédiaire d'un appendice en épaulement (7) en porte à faux, sur un appendice complémentaire (8) du porte-couteaux (3) voisin et à l'autre extrémité, par l'intermédiaire d'une surface d'appui (9), sur une surface complémentaire (10) du corps principal.

2. Tête de couteaux selon la revendication 1, caractérisée par le fait que l'appendice en épaulement (7) est prévu sur l'extrémité postérieure du porte-couteaux, dans le sens de rotation de la tête de couteaux.

3. Tête de couteaux selon la revendication 1 ou 2, caractérisée par le fait que chaque porte-couteaux (3) est bloqué par l'intermédiaire d'une vis de serrage (11) pouvant se visser, depuis le corps principal (1), dans la région entre l'appendice en épaulement (7) et la surface d'appui (9).

4. Tête de couteaux selon l'une des revendications 1 à 3, caractérisée par le fait que le corps principal (1) présente une gorge circonférentielle (13) dans laquelle les porte-couteaux (3) s'engagent par leur guide central (14) faisant saillie par rapport à la surface d'appui (9).

5. Tête de couteaux selon l'une des revendications 1 à 4, caractérisée par le fait que le corps principal (1) présente des échancrures (6) alignées entre elles circonférentiellement à la manière d'un profil en dents de scie (15) pour l'insertion des porte-couteaux (3).

FIG.1

FIG.2

0 130 267